# EUROPEAN PATENT SPECIFICATION

(11) **EP 0 327 192 B1**
(45) Date of publication and mention of the grant of the patent: **13.03.1996**
(21) Application number: 89300064.6
(22) Date of filing: 05.01.1989
(51) Int. Cl.: B29C 39/42, B29C 39/24

(54) **Methods and apparatus for fabricating a high purity thermally-conductive polymer layer**
Verfahren und Vorrichtung zum Herstellen einer wärmegeleiteten Polymerschicht hoher Reinheit
Procédé et appareil pour fabriquer une couche en matière polymère thermoconductrice de haute pureté

(30) Priority: 07.01.1988 US 142138
(43) Date of publication of application: 09.08.1989
(73) Proprietor: VARIAN ASSOCIATES, INC., Palo Alto, CA 94303 (US)
(72) Inventor: Mears, Eric Loring, Rockport Massachusetts 01966 (US); Pierce, Keith D., Ipswich Massachusetts 01938 (US)
(74) Representative: Cline, Roger Ledlie

(56) References cited:
- EP-A- 0 107 104
- US-A- 4 143 852
- PATENT ABSTRACTS OF JAPAN, vol. 7, no. 153 (M-226), 5th July 1983; & JP-A-58 062 017 (HITACHI ZOSEN K.K.) 13-04-1983
- IDEM
- PATENT ABSTRACTS OF JAPAN, vol. 7, no. 47 (M-196)[1192], 24th February 1983; & JP-A-57 197 120 (SHOWA DENSEN DENRAN K.K.) 03-12-1982

## Description

This invention relates to moulding a thin polymer layer and includes a mould for such a layer and a method for moulding such a layer.

JP-A-58062017 discloses a mould for a fibre-reinforced resin item having two members which can be secured together.

The present invention in one aspect provides a mould as set out in claim 1. The invention also includes a mould for moulding a polymer layer using such a mould and comprising the steps as set out in claim 7.

An example of the invention will now be described with reference to the accompanying drawings in which:
Fig. 1 is a block diagram of moulding apparatus in accordance with the present invention shown during evacuation;
Fig. 2 is a block diagram of moulding apparatus in accordance with the present invention shown during injection of polymer resin into the mould cavities;
Fig. 3 is a cross-sectional view of a mould for fabricating a polymer layer; and
Fig. 4 is a block diagram illustrating the polymer layer fabrication process.

In an ion implantation system for treating a semiconductor wafer, the wafer is mounted on thermal transfer apparatus including a thermally conductive polymer layer 30 affixed to a heat transfer surface of a platen.

Prior art polymer layers have included voids or trapped gas bubbles which reduce the thermal transfer rate and can outgas during vacuum processing of the wafer.

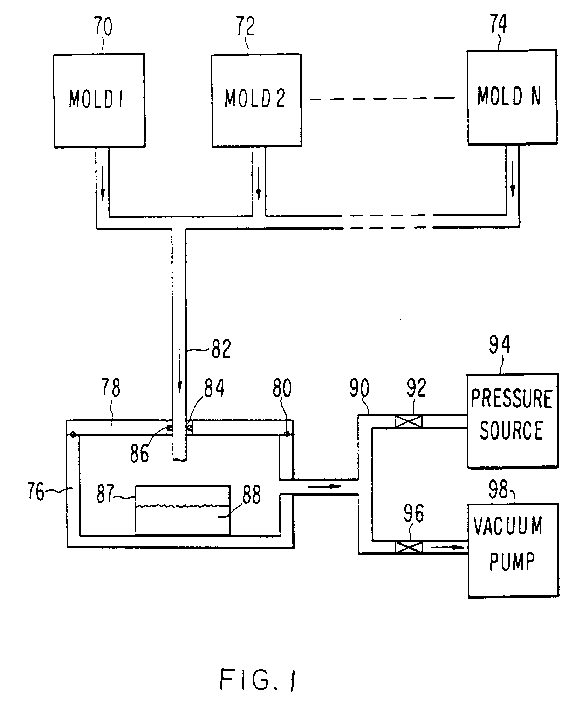

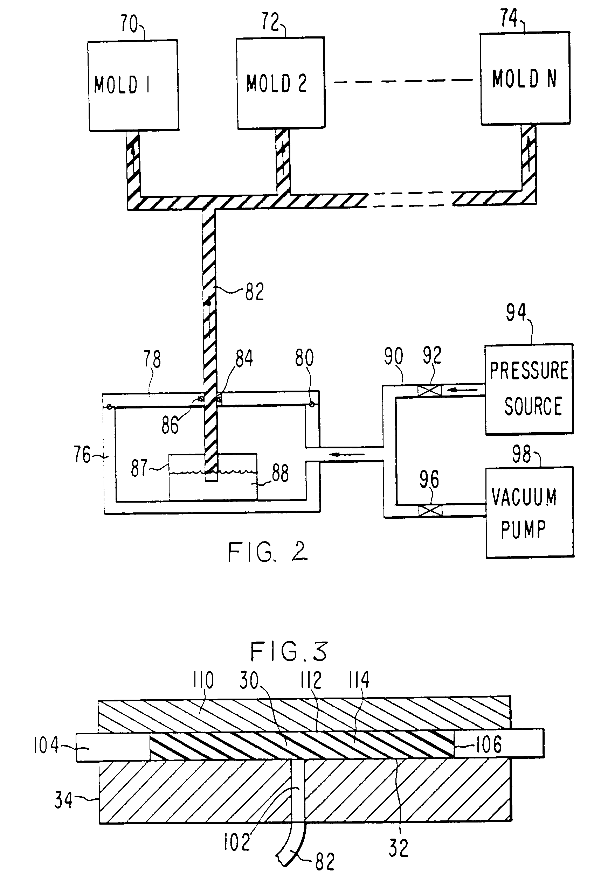

Apparatus for moulding the present polymer layer 30 is illustrated in block diagram form in Figs. 1 and 2. A preferred mould structure is illustrated in Fig. 3. The apparatus of Figs. 1 and 2 can be utilized to fabricate polymer layers 30 for one or more wafer sites. A mould 70 is utilized for forming the polymer layer 30 on aluminum platen 34. Moulds 72 and 74 are utilized for forming additional polymer layers on additional platens (not shown) in a single moulding process. The moulds 70, 72, 74 and sealed vacuum-tight A container 76 is sealed utilizing a cover 78 and an O-ring 80. A tube 82 passes through an opening 84 in cover 78 and is connected to a mold cavity (not shown in FIG. 1) in each of molds 70, 72, 74. The tube 82 is sealed to cover 78 by an O-ring 86. Preferably, the tube 82 is flexible and is disposable after each molding process.

Within container 76 is a vessel 87 which contains a liquid resin 88 used to form the polymer layer 30. Typically, the resin 88 is formed as a mixture of two or more reacting components which are kept separate until the fabrication procedure begins. As used herein, the term "resin" is used to refer to the liquid form of the polymer layer prior to curing, in which form it can be pumped or injected into a mold. It will be understood that the resin 88 can be placed in the container 76 without using vessel 87. However, a separate vessel 87 provides the capability to keep the container 76 clean and to easily replace the resin 88 when desired.

The sealed container 76 is coupled by a conduit 90 through a valve 92 to a pressure source 94. The pressure source 94 can be an air pump or other means for pressurizing the container 76 to a desired pressure level of about 3.4 x 10⁴ Pa. The container 76 is also coupled by conduit 90 through a valve 96 to a vacuum pump 98 which provides the capability to evacuate the sealed container 76 to a pressure level of about 1 torr.

The tube 82 is coupled vacuum-tight to one or more molds 70, 72, 74 and the end of tube 82 within container 76 is positioned outside the liquid resin 88. Valve 92 is closed and valve 96 is opened, causing vacuum pump 98 to evacuate both the sealed container 76 and the mold cavities in molds 70, 72, 74 as shown in FIG. 1. The reduction in pressure in sealed container 76 promotes outgassing of gas bubbles in liquid resin 88, thereby providing a uniform and gas-free material.

Next, the end of tube 82 within container 76 is lowered below the surface of liquid resin 88 by sliding the tube 82 through O-ring 86, valve 96 is closed and valve 92 is opened. Pressure source 94 provides the prescribed pressure within container 76, causing liquid resin 88 to be forced through tube 82 into still-evacuated mold cavities in molds 70, 72, 74 as shown in FIG. 2. Since the mold cavities have been evacuated and the liquid resin 88 has been outgassed, the mold cavities are filled with liquid resin 88 which is substantially free of trapped gas bubbles. The resin 88 in the mold cavities is allowed to cure, either at room temperature or at an elevated temperature, to provide the polymer layer. The polymer layer formed by this process is highly uniform and free of surface cavities and trapped gas bubbles.

The details of one embodiment of the molds 70, 72, 74 are illustrated in FIG. 3. The aluminum platen 34, on which the silicone rubber layer is to be formed, is provided with a hole 102 between heat transfer surface 32 and the opposite surface. A flexible, resilient gasket 104 having an opening 106 is positioned on the heat transfer surface 32. The gasket 104 has a thickness equal to the desired thickness of the polymer layer, and the opening 106, typically circular, has a diameter equal to the desired diameter of the polymer layer. Preferably, the gasket 104 is formed of polyurethane. Then, an upper mold member 110, having a mold release surface 112, is placed over gasket 104 so as to form a sealed mold cavity 114 which defines the size and shape of the polymer layer to be molded.

As noted hereinabove, mold release surface 112 can be glass, hardened stainless steel, polyester film or another material having sufficient hardness to prevent thermally-conductive particles in resin 88 from prodtruding above the surface of the polymer layer, while avoiding adherence of the polymer layer thereto during curing. Preferably, the mold release surface 112 is made optically flat. When necessary, a mold release material in the form of an aerosol spray can be applied to mold release surface 112. A preferred aerosol spray is Teflon having particle sizes in the range of 1-5 micrometers. In one preferred embodiment, the mold release surface 112 can be polyester film which transfers to polymer layer 30 during molding and which is retained on the polymer layer 30 after molding for protection during the remainder of the system assembly and test procedure. The polyester film is subsequently removed by peeling it from the polymer layer 30. The use of a resilient gasket 104 seals the mold cavity 114 and defines the thickness and the diameter of the polymer layer 30, while preventing flashing (leakage between the mold elements) and other irregularities at the peripheral edge of the polymer layer.

The tube 82 from sealed container 76 is coupled by a suitable vacuum-tight fitting (not shown) of conventional construction through hole 102 to mold cavity 114 for evacuation and subsequent filling of mold cavity 114 as described hereinabove. The resin in mold cavity 114 is allowed to cure, typically at room temperature. Subsequent to curing, the mold member 110 and gasket 104 are removed from platen 34, leaving soft polymer layer 30 adhered to the heat transfer surface 32.

Next, the platen 34 and the polymer layer 30 are placed in a plasma etcher such as a Drytek etcher commonly used to remove photoresist from wafers. The chamber of the etcher is evacuated and oxygen is introduced into the chamber at a pressure level of about 400 microns. Radio frequency energy at a level of about one kilowatt is applied to the oxygen by the etcher so as to form an oxygen plasma in the chamber. While the platen 34 and the polymer layer 30 are not intentionally heated, the applied radio frequency energy raises their temperature to about 100°C. The platen 34 and the polymer layer 30 are left in the oxygen plasma for about 30 minutes, causing formation of the thin, relatively hard surface film 50 on polymer layer 30. The oxygen plasma treatment of the polymer layer 30 produces an extremely clean surface. In addition, the oxygen reacts with the silicon in the silicone rubber to form a silicone dioxide, or quartz, layer, preferably having thickness in the range of 0.1 to 5.0 micrometers. The thickness of the quartz layer depends on the oxygen plasma treatment time. Since silicone rubber consists of hydrogen, carbon and silicon, it is believed that the oxygen plasma erodes the hydrogen and carbon from the upper portion of the silicone rubber layer to form H₂O and CO₂, leaving an upper layer of almost pure silicon. This silicon then reacts with the oxygen in the plasma to form the oxide layer. It is further believed that oils in the rubber bubble up during the oxygen plasma treatment and react with the oxygen to form silicon dioxide.

It has been found that the oxide (quartz) surface film 50 is easily fractured into multiple plates varying in dimension from about 5 to 1,000 micrometers across. The plates can be created by applying a mechanical stress, a thermal stress or a combination thereof to the film 50. The quartz plates do not flake off the silicone rubber surface since they are formed as an integral part of it. Since each of the multiple plates moves independently, they conform to surface irregularities on the back of the wafer and to particles inadvertently trapped between the wafer and the polymer layer. As a result, cooling performance is substantially enhanced.

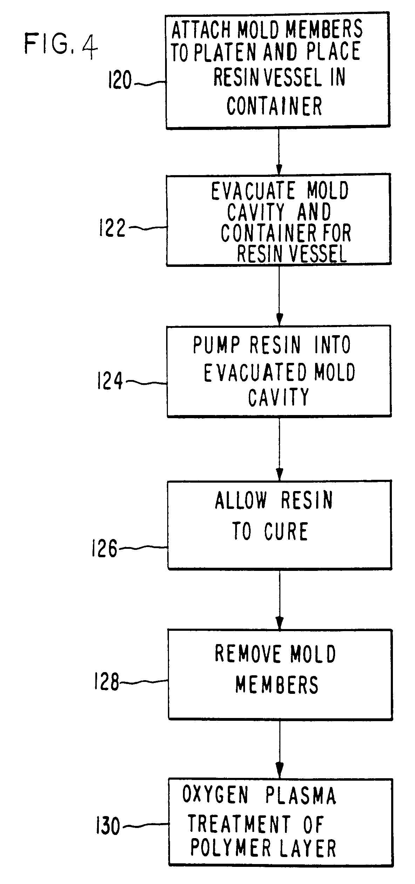

The method for fabricating the polymer layer 30 is summarized in FIG. 4. Initially, gasket 104 and mold member 110 are attached to platen 34 to form mold cavity 114, as indicated in step 120, and resin 88 in vessel 87 is placed in container 76 and cover 78 is sealed thereto. Next, valve 96 is opened, and mold cavity 114 and container 76 are evacuated in step 122. Tube 82 is immersed in resin 88, valve 96 is closed and valve 92 is opened so that pressure source 94 pumps resin into mold cavity 114, as indicated in step 124. The resin is permitted to cure in step 126, and gasket 104 and mold member 110 are removed in step 128. Finally, the platen 34 and polymer layer 30 adhered thereto are subjected to oxygen plasma treatment to form surface film 50 in step 130.

It will be understood that other techniques for forming the surface film 50 are included within the scope of the present invention. For example, deposition of silane gas and oxygen on the silicone rubber surface can be utilized to form the oxide layer. In addition, the surface film can be formed of another smooth, plate-like material such as graphite. Graphite, mechanically deposited and rubbed so as to adhere to the surface of the silicone rubber layer, produces enhanced thermal transfer and does not adhere to wafers. The primary requirement is to provide a thin, smooth and relatively hard surface film on a relatively soft, thermally-conductive polymer layer. The surface film prevents sticking and permits intimate contact with the semiconductor wafer. The soft polymer layer and its surface film both conform to the back surface of the wafer and both have high thermal conductivity so that overall thermal transfer performance is greatly improved. Thermal contact resistances have been measured with the thermal transfer apparatus disclosed herein at about 10°C/watt/cm². By contrast, a good performance with gas cooling is about 40°C/watt/cm² and typical performance with prior art polymer layers is about 50°-60°C/watt/cm².

## Claims

1. A mould for a thin polymer layer comprising a first member having a first mould surface, a second member having a second smooth, hard mould release surface opposed to said first mould surface, a gasket between said first member and said second member, said first and second members and said gasket together defining a mould cavity, said gasket having a thickness equal to the desired thickness of said mould cavity and having an opening that defines the outer periphery of said mould cavity, and means for evacuating said mould cavity and for injecting resin for a polymer layer into said mould cavity, said first surface being adapted to adhere to the polymer layer formed by curing said resin, said second surface being adapted to prevent adherence of said polymer layer thereto.

2. A mould as claimed in claim 1 wherein said gasket is resilient.

3. A mould as claimed in claim 2 wherein said gasket comprises polyurethane.

4. A mould as claimed in any one of claims 1 to 3 wherein said second member has a polyester film mould release surface.

5. A mould as claimed in any one of claims 1 to 3 wherein said second member has a hardened stainless steel mould release surface.

6. A mould as claimed in any one of claims 1 to 3 wherein said second member has a glass mould release surface.

7. A method as claimed in any one of claims 1 to 6 for moulding a polymer layer using the mould of claim 1 comprising the steps of (a) evacuating said mould cavity;
(b) injecting a polymer resin into said mould cavity;
(c) causing said polymer resin to cure;
(d) removing said second member from said mould to expose a polymer layer attached to said first surface of said first member; and
(e) treated said polymer layer in an oxygen plasma while said polymer layer remains attached to said first surface.

## Patentansprüche

1. Form für eine dünne Polymerschicht enthaltend
ein erstes Teil mit einer ersten Formoberfläche,
ein zweites Teil mit einer zweiten glatten, harten Formlöseoberfläche, welche der ersten Formoberfläche gegenüber liegt,
eine Dichtung zwischen dem ersten Teil und dem zweiten Teil, die zusammen mit dem ersten und zweiten Teil eine Formausnehmung definiert und eine der gewünschten Dicke der Formausnehmung entsprechende Dicke und eine Öffnung hat, die den äußeren Umfang der Formausnehmung bestimmt,
und Mittel zum Evakuieren der Formausnehmung und zum Injizieren von Harz für eine Polymerschicht in die Formausnehmung,
wobei die erste Oberfläche zum Haften an der von dem aushärtenden Harz gebildeten Polymerschicht angepaßt ist und die zweite Oberfläche angepaßt ist, das Haften der Polymerschicht an der zweiten Oberfläche zu verhindern.

2. Form nach Anspruch 1, bei der die Dichtung federnd ist.

3. Form nach Anspruch 2, bei der die Dichtung aus Polyurethan besteht.

4. Form nach einem der Ansprüche 1 bis 3, bei der das zweite Teil eine Polyesterfilm-Formlöseoberfläche hat.

5. Form nach einem der Ansprüche 1 bis 3, bei der das zweite Teil eine Formlöseoberfläche aus gehärtetem Edelstahl hat.

6. Form nach einem der Ansprüche 1 bis 3, bei der das zweite Teil eine Formlöseoberfläche aus Glas hat.

7. Verfahren nach einem der Ansprüche 1 bis 6 zum Formen einer Polymerschicht unter Verwendung der Form aus Anspruch 1 mit den Schritten
(a) Evakuieren der Formausnehmung;
(b) Injizieren von Polymerharz in die Formausnehmung;
(c) Veranlassen des Aushärtens des Polymerharzes;
(d) Entfernen des zweiten Teils von der Form zum Bloßlegen einer auf der ersten Oberfläche des ersten Teils angebrachten Polymerschicht;
und
(e) Behandeln der Polymerschicht in einem Sauerstoffplasma, während die Polymerschicht auf der ersten Oberfläche befestigt bleibt.

## Revendications

1. Moule pour une couche mince de polymère, comprenant un premier élément possédant une première surface de moule, un second élément possédant une seconde surface lisse et dure de libération de moule située à l'opposé de ladite première surface de moule, une garniture d'étanchéité disposée entre ledit premier élément et ledit second élément, lesdits premier et second éléments et ladite garniture d'étanchéité définissant conjointement une cavité de moule, ladite garniture d'étanchéité possédant une épaisseur égale à l'épaisseur désirée de ladite cavité de moule et possédant une ouverture qui définit la périphérie extérieure de ladite cavité de moule, et des moyens pour établir un vide dans ladite cavité de moule et pour injecter une résine pour une couche de polymère dans ladite cavité de moule, ladite première surface étant adaptée pour adhérer à la couche de polymère formée par durcissement de ladite résine, ladite seconde surface étant adaptée pour empêcher l'adhérence de ladite couche de polymère sur cette surface.

2. Moule selon la revendication 1, dans lequel ladite garniture d'étanchéité est élastique.

3. Moule selon la revendication 2, dans lequel ladite garniture d'étanchéité comprend du polyuréthane.

4. Moule selon l'une quelconque des revendications 1 à 3, dans lequel ledit second élément possède une surface de libération de moule formée d'un film de polyester.

5. Moule selon l'une quelconque des revendications 1 à 3, dans lequel ledit second élément possède une surface de libération de moule réalisée en acier inoxydable trempé.

6. Moule selon l'une quelconque des revendications 1 à 3, dans lequel ledit second élément possède une surface de libération de moule en verre.

7. Procédé selon l'une quelconque des revendications 1 à 6 pour le moulage d'une couche de polymère en utilisant le moule selon la revendication 1, comprenant les étapes consistant à :
a) mettre sous vide ladite cavité de moule ;
b) injecter une résine de polymère dans ladite cavité de moule;
c) faire durcir ladite résine de polymère;
d) éliminer ledit second élément dudit moule pour exposer une couche de polymère fixée à ladite première surface dudit premier élément; et
e) traiter ladite couche de polymère dans un plasma d'oxygène alors que ladite couche de polymère reste fixée à ladite première surface.
